Europäisches Patentamt

European Patent Office

Office européen des brevets

(11) Publication number: **0 221 366 B1**

## EUROPEAN PATENT SPECIFICATION

(45) Date of publication of patent specification: **15.01.92**

(51) Int. Cl.⁵: **B60B 33/00**, B60B 33/02

(21) Application number: **86113736.2**

(22) Date of filing: **03.10.86**

(54) **Improved lightweight aircraft furniture caster assembly.**

(30) Priority: **08.11.85 US 796066**

(43) Date of publication of application:
**13.05.87 Bulletin 87/20**

(45) Publication of the grant of the patent:
**15.01.92 Bulletin 92/03**

(84) Designated Contracting States:
**BE CH DE ES FR GB IT LI NL SE**

(56) References cited:
**DE-B- 1 275 899**
**GB-A- 1 370 998**
**US-A- 2 022 347**
**US-A- 3 002 589**
**US-A- 4 494 271**

(73) Proprietor: **Nordskog, Robert A.**
**18135 Karen Drive**
**Tarzana California(US)**

(72) Inventor: **Nordskog, Robert A.**
**18135 Karen Drive**
**Tarzana California(US)**

(74) Representative: **Baillie, Iain Cameron et al**
**c/o Ladas & Parry, Altheimer Eck 2**
**W-8000 München 2(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

BACKGROUND OF THE INVENTION

FIELD OF THE INVENTION

The present invention generally relates to furniture components and, more particularly, to an improved lightweight aircraft furniture caster assembly.

PRIOR ART

Conventional commercial aircraft food and drink dispensing push carts, storage carts, wheeled chairs and the like bear caster assemblies which are relatively heavy and cumbersome and include steel wheels and brackets and the like. It has been found that such assemblies considerably increase the weight of furniture to which they are attached, and in most cases have strengths which greatly exceed their real needs. The extra weight of the caster assemblies significantly increases the aircraft load and thus the aircraft fuel requirements and ultimately the costs of operating the aircraft.

Commercial airlines are particularly cost conscious because of the high cost of jet fuel and the intense competition between the various airlines for passengers. Passenger preferences in many instances hinge on the relative fare rates and these are ultimately controlled, in part, by the flight cost, including aircraft fuel consumption.

There is a current need for improved fuel conservations, because of incipient fuel shortages, as well as requirement of airlines to compete economically for passengers. There consequently is a need for an improved aircraft furniture caster assembly which will reduce aircraft fuel costs substantially. The assembly should be capable of being provided in various sizes and styles to fit various types of aircraft furniture.

SUMMARY OF THE INVENTION

The improved aircraft furniture caster assembly of the present invention comprises a caster wheel having a plurality of spaced passageways symmetrically disposed around a central hub of the wheel and extending transversely and completely through the wheel. The passageways have reinforcing rods releasably secured therein to dimensionally stabilize and strengthen the wheel. A generally inverted U-shaped caster wheel support bracket is releasably connected to the wheel for permitting free rotation of the wheel. A braking means is provided which comprises a metallic braking plate and a separate braking mechanism. The metallic braking plate is releasably connected to the wheel, and is generally circular, includes a plurality of notches therein, and has two side surfaces and an outer periphery. The wheel has two sides, and the braking plate is secured by the reinforcing rods to one of the sides of said wheel. The separate braking mechanism comprises an element which fits within one of the notches to lock the wheel in a stopped position. According to the invention, the caster assembly is a lightweight aircraft furniture caster assembly. The wheel consists essentially of lightweight material and has transverse cut-away portions to reduce the overall weight of said wheel. The U-shaped bracket and said braking means also consist essentially of lightweight material. The braking plate includes semicircular notches at its outer periphery, and the separate braking mechanism is adapted to releasably bear against one of the side surfaces of the braking plate i.e., one of the side surfaces that faces in the same direction as one of the wheel sides. The element frictionally engages the side surface to slow the rotation of the wheel, the element fitting within one of the peripheral notches to lock the wheel in a stopped position.

A caster assembly is shown in U.S. Patent No. 3,002,589 issued October 3, 1961 to H.G. Cook. However, Cook is concerned with caster wheels of the type that are used on dollies employed for transporting heavy equipment, and therefore lacks suggesting some of the characteristics of the present invention, and further teaches mechanisms that would be more suitable for heavy equipment use than for aircraft furniture.

For example, Cook shows no use of lightweight materials in the construction of his caster assembly. Further, Cook does not suggest any transverse cut-away portions of the wheel to reduce the overall weight of the wheel.

Cook also employs a diverse mechanical arrangement for his braking means as compared to the present invention. In particular, Cook uses a dog (41) wedged crosswise in one of a plurality of elliptical grooves (23) to lock the wheel in place. When the dogs are in alignment with the narrow grooves 24, the wheel moves freely and the dogs of the brake shoe 40 pass unimpeded through the grooves 24. Moreover, Cook teaches that the brake shoes 40 and grooves 23, 24 act strictly as a locking mechanism i.e., not a "braking" mechanism. Cook only speaks of the two positions of the dogs 41 as described above, so that the wheel is either free wheeling or locked in place. Since the shoes 41 of Cook do not grab or stick, there cannot be any frictional engagement. Further, there is no contact whatsoever between Cook's dogs 41 and a side surface of a wheel braking plate as is taught by the present invention.

These characteristics of Cook are representative of prior art caster assemblies which are problematical, in that they are heavy and not suitable for use with aircraft furniture. Additionally, such prior art caster assemblies cannot provide a simplified arrangement to frictionally slow and then lock a caster wheel in place. The present invention solves these technical problems.

In the present invention, the braking mechanism includes an element which has a dual function, i.e., to frictionally engage one of the side surfaces of a braking plate to slow rotation of the wheel, and to fit within one of the notches to lock the wheel in a stopped position. Cook does not even remotely suggest such a dual purpose element. The present invention thus provides the unexpected effect of locking the wheel in a stopped position using the identical element that is also used to slow the rotation of the wheel by frictional engagement with a braking plate.

Reinforcing inserts of metal, low friction plastic or the like are releasably disposed in the central transverse axle passageway in the wheel to help align the wheel axle therein, facilitate turning of the wheel and strengthen the wheel. Further features of the improved caster assembly are set forth in the following detailed description and accompanying drawings.

DRAWINGS

Figure 1 is a schematic top plan view of the connector plate portion of a the improved aircraft furniture caster assembly of the present invention;

Figure 2 is a schematic side elevation of the caster assembly referred to in Figure 1;

Figure 3 is a schematic front elevation, partly broken away, of the caster assembly shown in Figure 2;

Figure 4a and Figure 4b are, respectively, schematic side elevations of a wheel axle passageway central sleeve and a peripheral sleeve for the wheel axle passageway;

Figure 5 is an enlarged schematic side elevation of the wheel of the assembly of Figure 2;

Figure 6 is an enlarged section taken along the section line 6-6 of Figure 5;

Figure 7 is a schematic side elevation, partly broken away, of the improved lightweight aircraft furniture caster assembly of the present invention;

Figure 8 is a schematic top plan view of the bracket of the assembly of Figure 7;

Figure 9 is a schematic front exploded view partly broken away, of the assembly of Figure 7;

Figure 10 is a schematic side elevation of the braking plate of the assembly of Figure 7; and,

Figure 11 is a schematic front elevation of the assembly of Figure 7, showing the assembly attached to the underside of an aircraft food and drink dispensing push cart, with a wheel braking mechanism also connected to the cart and releasably bearing against the braking plate of the caster assembly.

DETAILED DESCRIPTION

FIGURES 1-6

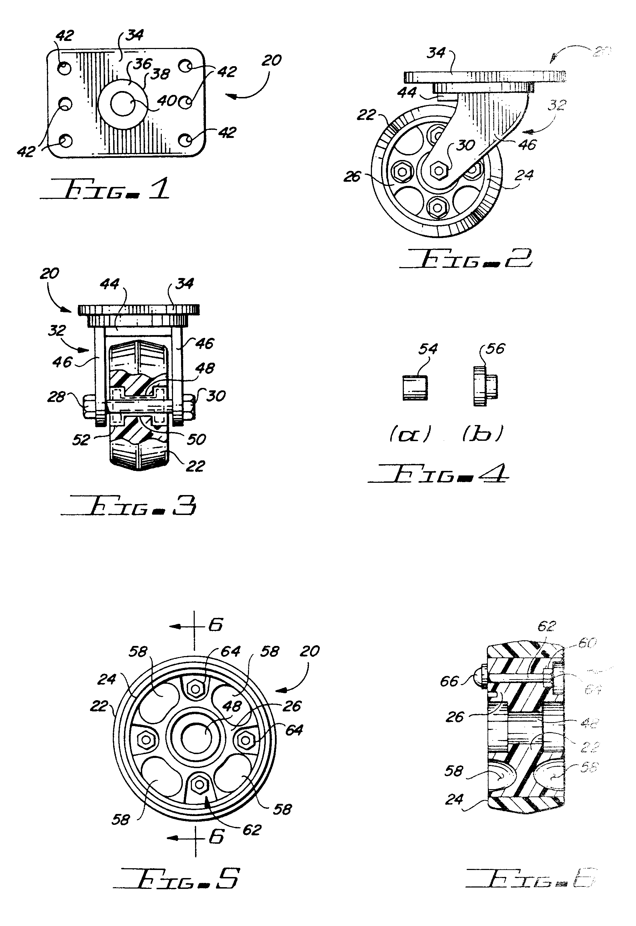

Now referring more particularly to Figures 1 6 of the accompanying drawings, of the improved, lightweight aircraft furniture caster assembly is schematically depicted therein. Thus, assembly 20 is shown. It is adaptable for use with all types of aircraft furniture.

Assembly 20 comprises a wheel 22, which is fabricated of lightweight material preferably selected from the group consisting of aluminum, magnesium, plastic, glass and mixtures thereof. In one preferred embodiment, the outer rim 24 of wheel 22 is formed of glass fiber reinforced nylon while the central core 26 thereof which is bonded thereto may be of, for example, polypropylene, polystyrene or the like. If desired, wheel 22 could be fabricated of the same material throughout.

Wheel 22 is of substantial width and is releasably secured, as by a bolt 28 and nut 30 to a generally inverted U shaped bracket or yoke 32, in turn secured at the upper end thereof to a flat mounting plate 34 by swivel securing means which may be in the form of a depending sleeve 36 received in an opening 38 in plate 34 and attached to bracket 32. Sleeve 36 has a vertical swivel arm receiving opening therein so that bracket 32 is supported below and turns freely below plate 34 on such an arm while plate 34 can be fixedly secured to the underside of aircraft furniture (not shown) as by screws (not shown) in vertical openings 42 therein.

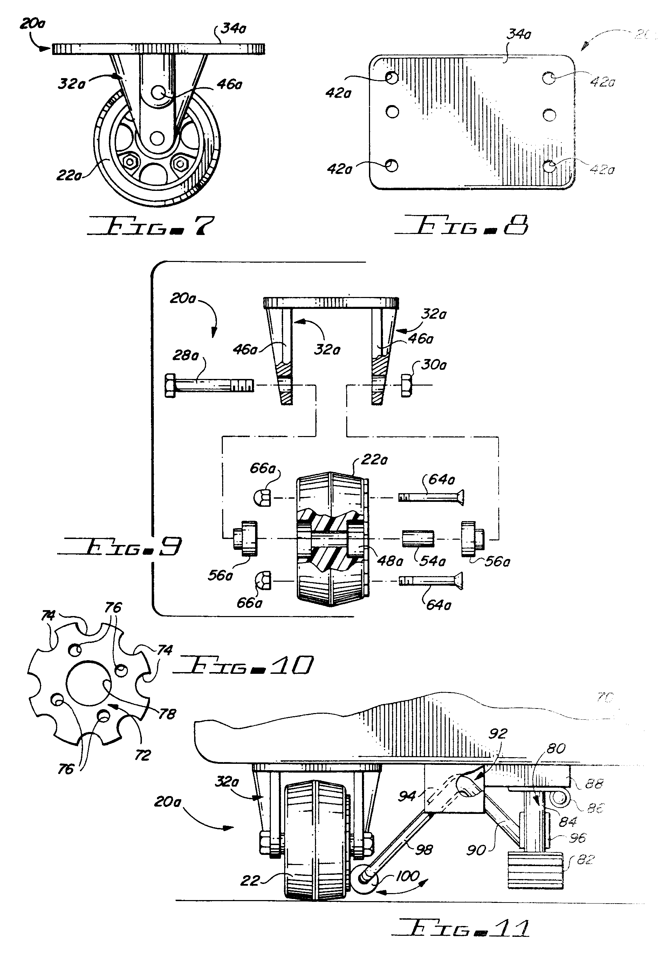

It will be noted that bracket 32 includes a top horizontal portion 44 and a pair of spaced parallel depending legs 46 which may be angled (Figure 2). Bracket 32 and plate 34, as well as bolt 28, nut 30 and sleeve 36, can be of strong material, such as plastic, glass or a light metal such as aluminum, magnesium or the like or a composite thereof.

Bolt 28 acts as an axle and horizontally passes through openings (not shown) in the lower ends of legs 46 and through a horizontal axle passageway 48 in wheel 22. Passageway 48 is dumbbell shaped with a small diameter central portion 50 and larger diameter lateral portions 52. A sleeve 54 (Figure 4a) is releasably disposed in portion 50 and a pair of sleeves 56 (Figure 4b) are releasably disposed in portions 52. Sleeves 54 and 56 preferably are of lightweight metal such as aluminum or magnesium and/or of slippery plastic material such as polytetrafluroethylene, to act as a guideway for axis bolt 28 and to help strengthen wheel 22 while promoting free turning of wheel 22 relative to axle bolt 28.

It will be noted from Figures 2, 5 and 6 that wheel 22 has four symmetrically disposed openings 58 extending transversely therethrough to reduce its weight substantially and has 4 smaller transverse openings 60 extending therethrough in which lightweight reinforcing rods 62, preferably of aluminum and magnesium comprising bolts 64 with nuts 66, are secured to dimensionally stabilize and strengthen wheel 22. Accordingly, wheel 22 is both strong and light, utilizing a minimum of material strategically placed. Assembly 20 substantially reduces aircraft flight fuel costs and is inexpensive to make, easy to install, durable and effective.

FIGURES 7-11

The improved lightweight aircraft furniture caster assembly of the present invention is schematically depicted in Figures 7 11. Thus, assembly 20a is shown. Components thereof similar to those of assembly 20 bear the same numerals, but are succeeded by the letter "a". Assembly 20a is substantially identical to assembly 20, except that assembly 20a is of the fixed caster type, rather than the swivel caster type. In this regard, swiveling means are omitted and bracket 32a includes in its top portion 44a holes 42a through which screws (not shown) can be placed to mount bracket 32a to the underside of aircraft furniture, such as push cart 70 (Figure 11). Moreover, spaced vertical depending legs 46a are not angled.

Wheel 22a is similar to wheel 32, as are its components, including bolt 28a, nut 30a, bolts 64a and nuts 66a, sleeve 54a and sleeves 56a, and passageway 48a. Moreover, a flat circular braking plate 72 having a notched outer periphery 74 is releasably secured to one side of wheel 22 by bolts 64a received through openings 76 in plate 72. Plate 72 is also provided with a central opening 78 matching that of wheel 22a.

Figure 11 schematically depicts assembly 20a installed on the underside of push cart 70 and with one type of a conventional cart braking mechanism 80 also installed on the underside of cart 70. Mechanism 80 is designed to releasably bear against plate 72 to slow the rotation of wheel 22a, stop such rotation and lock wheel 22a in the stopped position. For example, mechanism 80 may include a foot operated pedal 82 connected to an arm 84 biased forward by spring 86 and hinged to a support 88.

Movement of arm 84 rearward by pedal 82 against the spring bias causes arm 84 to act upon one arm 90 of a generally inverted U-shaped member 92 held in a channeled bracket 94 attached to the underside of cart 70 and, via a motion translation component 96 connected to arm 84 and member 92, to tilt member 92 such that the other arm 98 of member 92 moves toward plate 72, forcing a rubber ball or roller 100 connected thereto against plate 72 to frictionally engage it and slow, then stop the rotation of wheel 22a. Ball 100 is dimensioned to fit into a notch 74 of plate 72 so as to lock plate 72 in the stopped position until foot pedal 82 is released and spring 86 biases arm 80 forward, causing arm 98 and ball 100 to pivot away from plate 72.

It will be understood that any other suitable braking arrangement utilizing braking plate 72 and according to the claims can be employed in place of that described above. In any event, assembly 20a is light in weight durable, efficient and compact.

Various other modifications, changes, alterations and additions cn be made in the improved lightweight aircraft furniture caster assembly of the present invention, its components and their parameters. All such modifications, changes, alterations and additions as are within the scope of the appended claims form part of the present invention.

**Claims**

1. A caster assembly comprising: a caster wheel (22) having a plurality of spaced passageways (60) symmetrically disposed around a central hub (54,56) of said wheel, and extending transversely and completely through said wheel, said passageways (60) having reinforcing rods (62) releasably secured therein to dimensionally stabilize and strengthen said wheel; a generally inverted U-shaped caster wheel support bracket (32) releasably connected to said wheel (22) for free rotation of said wheel; and braking means including a metallic braking plate (72) releasably connected to said wheel, wherein said braking plate (72) is generally circular, includes a plurality of notches (74) therein, and has two side surfaces and an outer periphery, said wheel having two sides and said braking plate (72) being secured by said reinforcing rods (62) to one of said sides of said wheel, said braking means further including a separate braking mechanism (82-100) comprising an element (100) which fits within one of the notches to lock the wheel in a stopped position; and characterized in that: said caster assembly is a lightweight aircraft furniture caster assembly; said wheel consists essentially of lightweight material and has transverse cut-away portions (58) to reduce the overall weight of said wheel; said U-shaped bracket and said braking means consist essentially of lightweight material; said braking plate includes semicircular notches (74) at said outer periphery; and said separate braking mechanism (82-100) is adapted to releasably bear against one of the side surfaces of the braking plate (72), wherein said one of the side surfaces faces in the same direction as said one of said sides, said element (100) frictionally engaging said one of said side surfaces to slow the rotation of said wheel, said element (100) fitting within one of the peripheral notches to lock the wheel in a stopped position.

2. The lightweight aircraft furniture caster assembly of claim 1, characterized in that said wheel hub (54,56) has a transverse axle passageway (48) therethrough and wherein said axle passageway is lined with removable reinforcing sleeve inserts (54,56,54a,56a).

3. The lightweight aircraft furniture caster assembly of claim 2, characterized in that: said axle passageway (48) is generally dumbbell shaped, the lateral portions (52) thereof being of greater diameter than the medial portion thereof; that two of said inserts (56, 56a) are dimensioned to rest in said lateral portions (52) of said axle passageway (48); and that said inserts (54,56, 54a,56a) are in intimate contact with said wheel so as to act as strength-reinforcing axle guides.

4. The lightweight aircraft furniture caster assembly of any one of the preceding claims characterized in that said bracket (32) is adapted to be fixedly secured to the underside of an aircraft food and drink-dispensing push cart (70).

5. The lightweight aircraft furniture caster assembly of any one of the preceding claims characterized in that said wheel (22) comprises an outer rim (24) of glass-reinforced nylon connected to a central core portion (26) comprising polyurethane.

**Revendications**

1. Un ensemble à roue pivotante comprenant : une roue pivotante (32) comportant une pluralité de passages espacés (60) disposés symétriquement autour d'un moyeu central (54, 56) de ladite roue et s'étendent transversalement et complètement à travers ladite roue, lesdits passages (60) recevant des tiges de renfort, fixées de façon libérable pour stabiliser dimensionnellement et renforcer ladite roue; une patte de support de roue (32), généralement en forme de U inversé étant reliée de façon détachable à ladite roue (22) pour permettre à cette dernière une rotation libre; et des moyens de freinage comprenant une plaque de freinage métallique (72) reliée de façon libérable à ladite roue, dans lesquels une plaque de freinage (72), de forme généralement circulaire comprend une pluralité d'encoches (74), deux surfaces latérales et une périphérie extérieure, ladite roue comportant deux faces et ladite plaque de freinege (72) étant fixée par des tiges de renfort (62) à l'une des surfaces de ladite roue, les moyens de freinage comprenant en outre un mécanisme de freinage séparé (82-100) comportant un élément (100) qui s'ajuste dans l'une des encoches pour verrouiller la roue dans une position arrêtée; caractérisé en ce que l'ensemble à roue pivotante est un élément d'ensemble à roue pivotante léger pour équipement d'aéronef; ladite roue est réalisée essentiellement dans un matériau léger et comprend des parties évidées transverses (58) pour réduire le poids total de ladite roue; la patte de support en forme de U et les moyens de freinage sont réalisés essentiellement dans un matériau léger; la plaque de freinage comprend des encoches semi-circulaires (74) sur la périphérie externe; le mécanisme de freinage séparé (82-100) est adapté pour porter de façon libérable contre l'une des surfaces latérales de la plaque de freinage (72), dans lequel l'une des surfaces latérales est dirigée dans la même direction que l'une desdites faces de la roue, ledit élément (100) engageant par friction l'une desdites surfaces latérales pour réduire la rotation de ladite roue, ledit élément (100) s'ajustant dans l'une des encoches périphériques pour verrouiller la roue dans une position arrêtée.

2. Ensemble à roue pivotante léger pour équipement d'aéronef caractérisé en ce que le moyeu de roue (54, 56) comporte un passage transverse d'axe (48) et dans lequel le passage d'axe est chemisé au moyen de manchons d'inserts de renfort détachables.

3. Ensemble à roue pivotante léger pour équipement d'aéronef selon la revendication 2, caractérisé en ce que le passage d'axe (48) est généralement en forme de haltère, dont les parties latérales (52) sont de plus grand diamètre que la partie médiane, en ce que deux des inserts (56, 56a) sont dimensionnés pour reposer dans lesdites parties latérales (52) du passage d'axe (48); et en ce que les inserts (54, 56, 54a, 56a) sont en contact intime avec la roue de manière à agir comme des guides d'axe, de renforcement de résistance.

4. Ensemble à roue pivotante léger pour équipement d'aéronef selon l'une quelconque des revendications précédentes, caractérisé en ce que la patte de support (32) est adaptée pour être fermement fixée sur le dessous d'un chariot (70) de débit de boissons et d'aliments pour aéronef.

5. Ensemble à roue pivotante léger pour équipement d'aéronef selon l'une quelconque des revendications précédentes, caractérisé en ce que la roue (22) comprend une bordure en nylon renforcé de verre reliée à une partie de l'âme centrale (26) comportant un polyuréthane.

**Patentansprüche**

1. Laufrollenanordnung mit einer Laufrolle (22), die mit einer Mehrzahl von um eine zentrale Mabe (54, 56) der Rolle herum symmetrisch und im Abstand voneinander angeordneten Durchlässen (60) besitzt, die die Laufrolle vollständig quer durchsetzen, wobei in den Durchlässen (60) Bewehrungsstäbe (62) lösbar befestigt sind, die die Laufrolle in ihren Abmessungen stabilisieren und verfestigen; ferner mit einem allgemein die Form eines umgekehrten U besitzenden Laufrollenträger (32), der lösbar mit der Laufrolle (22) verbunden ist und eine freie Drehung der Laufrolle gestattet; und mit einer Bremseinrichtung, zu der eine metallische Bremsscheibe (72) gehört, die mit der Laufrolle lösbar verbunden ist, wobei die Bremsscheibe (72) allgemein kreisförmig ist und eine Mehrzahl von Einkerbungen (74) besitzt und zwei Seitenflächen und einen Außemumfang hat, die Laufrolle zwei Seiten hat und die Bremsscheibe auf einer der Seiten der Laufrolle mit den Bewehrungsstäben (62) verbunden ist, die Bremseinrichtung ferner einen eigenen Bremsmechanismus (82-100) besitzt, der ein Element (100) umfaßt, das passend in eine der Einkerbungen eingreifen kann, um die Laufrolle in einer Haltestellung festzulegen; dadurch gekennzeichnet, daß die Laufrollenanordnung eine Leichtbau-Laufrollenanordnung für Flugzeugmöbel ist; die Laufrolle im wesentlichen aus Leichtbauwerkstoff besteht und zum Vermindern des Gesamtgewichts der Laufrolle sich quer erstreckende, weggeschnittene Teile (58) besitzt; der U-förmige Träger und die Bremseinrichtung im wesentlichen aus Leichtbauwerkstoff bestehen; die Bremsscheibe an dem genannen Auße umfang halbkreisförmige Einkerbungen (74) besitzt; der eigene Bremsmechanismus (82-100) geeignet ist, an einer der Seitenflächen der Bremsscheibe (72) lösbar anzugreifen, die genannte eine der Seitenflächen in derselben Richtung weist wie die genannte eine der Seiten, das genannte Element (100) zum Verlangsamen der Drehung der Laufrolle reibungsschlüssig an der genannten einen der Seitenflächen angreift, und das genannte Element (100) zum Festlegen der Laufrolle in einer Haltestellung passend in eine der Umfangseinkerbungen eingreift.

2. Leichtbau-Laufrollenanordnung für Flugzeugmöbel nach Anspruch 1, dadurch gekennzeichnet, daß die Rollennabe (54, 56) von einem Achsendurchlaß (46) quer durchsetzt ist, der mit herausnehmbaren Bewehrungshülseneinsätzen (54, 56, 54a, 56a) ausgekleidet ist.

3. Leichtbau-Laufrollenanordnung für Flugzeugmöbel nach Anspruch 2, dadurch gekennzeichnet, daß der Achsendurchlaß (48) allgemein hantelförmig ist, daß seine seitlichen Teile (52) im Durchmesser größer sind als sein mittlerer Teil, daß zwei der genannten Einsätze (56, 56a) so bemessen sind, daß sie in den genannten Seitenteilen (52) des Achsendurchlasses (48) sitzen, und daß die Einsätze (54, 56, 54a, 56a) mit der Laufrolle in satter Berührung stehen, so daß sie als verstärkende Achsenführungen wirksam sind.

4. Leichtbau-Laufrollenanordnung für Flugzeugmöbel nach einem der vorhergehenden Ansprüche, dadurch gekennzeichnet, daß der Träger (32) an der Unterseite eines an Bord eines Flugzeuges verwendeten Schubwagens (70) für die Ausgabe von Speisen und Getränken befestigbar ist.

5. Leichtbau-Laufrollenanordnung für Flugzeugmöbel nach einem der vorhergehenden Ansprüche, dadurch gekennzeichnet, daß die Laufrolle (22) außen eine aus glasverstärktem Nylon bestehende Felge (24) besitzt, die mit einem zentralen Kernteil (26) verbunden ist, der wenigstens teilweise aus Polyurethan besteht.

FIG-1

FIG-2

FIG-3

(a)  (b)

FIG-4

FIG-5

FIG-6

FIG-7

FIG-8

FIG-9

FIG-10

FIG-11